# EUROPEAN PATENT SPECIFICATION

(11) **EP 3 354 608 B1**
(45) Date of publication and mention of the grant of the patent: **26.02.2020**
(21) Application number: 18153947.9
(22) Date of filing: 29.01.2018
(51) Int. Cl.: B65H 3/14, B65H 5/14

(54) **ARTICLE HOLDING DEVICE**
ARTIKELHALTEVORRICHTUNG
DISPOSITIF DE RETENUE D'ARTICLE

(30) Priority: 31.01.2017 JP 2017015318
(43) Date of publication of application: 01.08.2018
(73) Proprietor: BROTHER KOGYO KABUSHIKI KAISHA, Nagoya-shi, Aichi-ken 467-8561 (JP)
(72) Inventor: HARADA, Koichi, Aichi-ken 467-8562 (JP); TAGAWA, Yuji, Aichi-ken 467-8562 (JP); IWAMOTO, Tsuyoshi, Aichi-ken 467-8562 (JP); OSHIRO, Atsushige, Aichi-ken 467-8562 (JP); UEDA, Ryo, Aichi-ken 467-8562 (JP)
(74) Representative: J A Kemp LLP

(56) References cited:
- JP-A- 2012 040 621
- JP-U- S61 197 035
- US-A- 4 474 397

## Description

### BACKGROUND

The present invention relates to an article holding device.

There is a known device that holds a thin planar component, such as a semiconductor wafer, using non-contact suction (refer to Japanese Laid-Open Patent Publication No. 2012-40621, for example). The device is provided with a base body. The lower surface of the base body has a recessed portion provided with a fluid ejection portion that ejects a fluid (air). The periphery of the recessed portion is a non-contact suction portion. The device holds the article through non-contact suction, using a negative pressure that is generated between the device and the article as a result of the fluid ejected by the fluid ejection portion passing through the non-contact suction portion.

### SUMMARY

In the known device, the fluid ejected by the fluid ejection portion flows in an outward direction of the device by being guided by a guide body, and passes through the non-contact suction portion. When the device holds a sheet-like article, such as a cloth, whose surface area is larger than that of a semiconductor wafer, it is necessary to increase a suction power. In this case, it is necessary to increase a flow amount of air passing through the non-contact suction portion or to increase the pressure of the air, and the device thus increases in size. In the known device, there is a problem that it is difficult to increase the suction power.

It is an object of the present invention to provide an article holding device which can easily increase a suction power to be larger than that of a known device, and which can more reliably hold a sheet-like article, such as a cloth.

Embodiments provide an article holding device that includes a base portion and flow paths. The base portion includes a holding portion provided on a lower surface of the base portion and a recessed portion. The flow paths are communicated with holes provided in the holding portion. The holding portion is configured to suck and hold a sheet-like article using a negative pressure generated between the holding portion and the sheet-like article on a lower surface of the holding portion by a fluid supplied to the flow paths being ejected from the holes. The holding portion has a horizontal portion that extends horizontally. The holes include a first hole and a second hole. The first hole is provided on one side of the holding portion in a predetermined direction parallel to the horizontal portion, and is open in a first direction of a direction orthogonal to the predetermined direction. The second hole is provided on another side, which is opposite from the one side, of the holding portion in the predetermined direction, and is open in a second direction, which is the opposite direction from the first direction, and parallel to the first hole. The flow paths include a first flow path and a second flow path. The first flow path extends in the first direction toward the first hole and is communicated with the first hole. The second flow path extends in the second direction toward the second hole and is communicated with the second hole. The recessed portion is provided between the first hole and the second hole, and is recessed above the horizontal portion of the holding portion.

The article holding device supplies the fluid to the first flow path and the second flow path. Thus, the fluid is ejected in the first direction from the first hole and the fluid is ejected in the second direction from the second hole. The first hole and the second hole eject the fluid in mutually opposite directions with the recessed portion positioned therebetween. It is thus possible to effectively generate a negative pressure in a space of the recessed portion between the holding portion and the article, and the article that faces the holding portion can be drawn to the recessed portion side more strongly than a device that is not provided with the recessed portion. Therefore, the article holding device can easily increase the suction power to be larger than that of a known device, and can more reliably suck and hold the sheet-like article, such as a cloth.

In the article holding device, the holes may further include a third hole and a fourth hole. The third hole may be provided on the one side of the recessed portion of the holding portion in the predetermined direction. The fourth hole may be provided on the other side of the recessed portion of the holding portion in the predetermined direction. The flow paths may further include a third flow path and a fourth flow path. The third flow path may be communicated with the third hole and the first flow path. A direction from the third flow path toward the third hole may be the second direction. The fourth flow path may be communicated with the fourth hole and the second flow path. A direction from the fourth flow path toward the fourth hole may be the first direction. Since the article holding device supplies the fluid to the first to fourth flow paths, in comparison to a device that supplies the fluid only to the first and second flow paths, it is possible to more reliably generate a negative pressure in the space of the recessed portion between the holding portion and the article. Thus, the article that faces the holding portion can be drawn to the recessed portion side.

In the article holding device, the holding portion may include a first flow path portion, a second flow path portion, a first inclined portion, and a second inclined portion. The first flow path portion may be provided with the first hole and the third hole, and may protrude below the recessed portion. The second flow path portion may be disposed on the opposite side to the first flow path portion with respect to the recessed portion, may be provided with the second hole and the fourth hole and, may protrude below the recessed portion. The first inclined portion may be connected to an upper end of the first flow path portion, the recessed portion, and an upper end of the second flow path portion, and may be inclined downward to the first direction. The second inclined portion may be connected to the upper end of the first flow path portion, the recessed portion, and the upper end of the second flow path portion, and may be inclined downward to the second direction. In the article holding device, the fluid ejected from the first hole and the fourth hole moves along the first inclined portion, and the fluid ejected from the second hole and the third hole moves along the second inclined portion. Therefore, the article holding device can more reliably generate a negative pressure in the space of the recessed portion between the holding portion and the article, and can draw the article that faces the holding portion to the recessed portion side.

In the article holding device, a distance from each of the first hole and the third hole to a recessed portion side of the first flow path portion and a distance from each of the second hole and the fourth hole to a recessed portion side of the second flow path portion may be shorter than half a length of the recessed portion in the predetermined direction. In order to effectively generate a negative pressure in the space of the recessed portion, it is preferable to eject the fluid from closer to the recessed portion. The article holding device is able to be provided with the first hole and the third hole in the vicinity of a boundary between the recessed portion and the first flow path portion. The article holding device is also able to be provided with the second hole and the fourth hole in the vicinity of a boundary between the recessed portion and the second flow path portion. Therefore, the article holding device is able to generate effectively a negative pressure in the space of the recessed portion.

### BRIEF DESCRIPTION OF THE DRAWINGS

Embodiments will be described below in detail with reference to the accompanying drawings in which:
FIG. 1 is a perspective view of a conveyance system 1;
FIG. 2 is a front view of the conveyance system 1:
FIG. 3 is a left side view of an articulated robot arm device 3 and an article supply device 4 when an article holding device 23 is in a holding position and a placement table 21 is moved upward;
FIG. 4 is a perspective view of the article holding device 23;
FIG. 5 is a perspective view of the article holding device 23;
FIG. 6 is a bottom view of the article holding device 23 when inhibiting members 52 and 54 are in a protruding position;
FIG. 7 is a cross-sectional view in the direction of arrows along a line A-A shown in FIG. 4 when the inhibiting members 52 and 54 are in the protruding position;
FIG. 8 is a cross-sectional view in the direction of arrows along a line A-A shown in FIG. 4 when the inhibiting members 52 and 54 are in the retracted position;
FIG. 9 is an enlarged view of a periphery of the needle 52 shown in FIG. 7;
FIG. 10 is a block diagram showing an electrical configuration of the article holding device 23;
FIG. 11 is a flowchart of article holding processing;
FIG. 12 is a left side view of the articulated robot arm device 3 and the article supply device 4 when the article holding device 23 is moved upward from the holding position.

### DETAILED DESCRIPTION

An embodiment of the present invention will be explained with reference to the drawings. A schematic configuration of a conveyance system 1 will be explained. In the following explanation, left and right directions, front and rear directions, and up and down directions as indicated by arrows in the drawings are used.

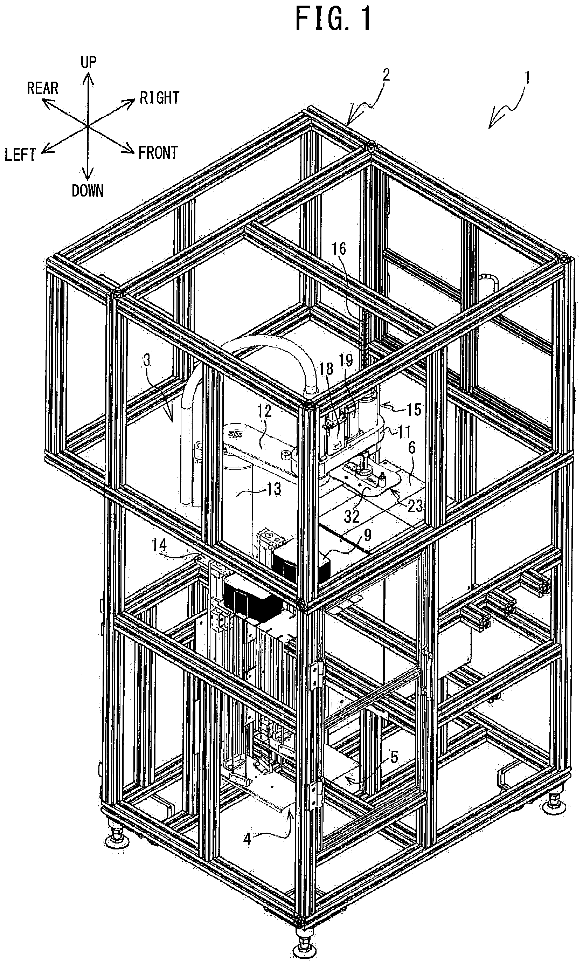

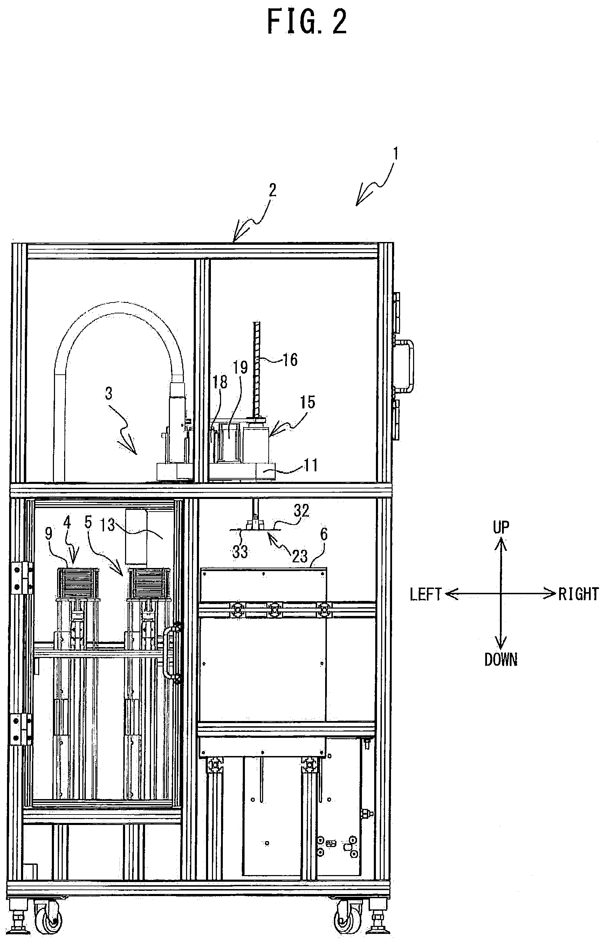

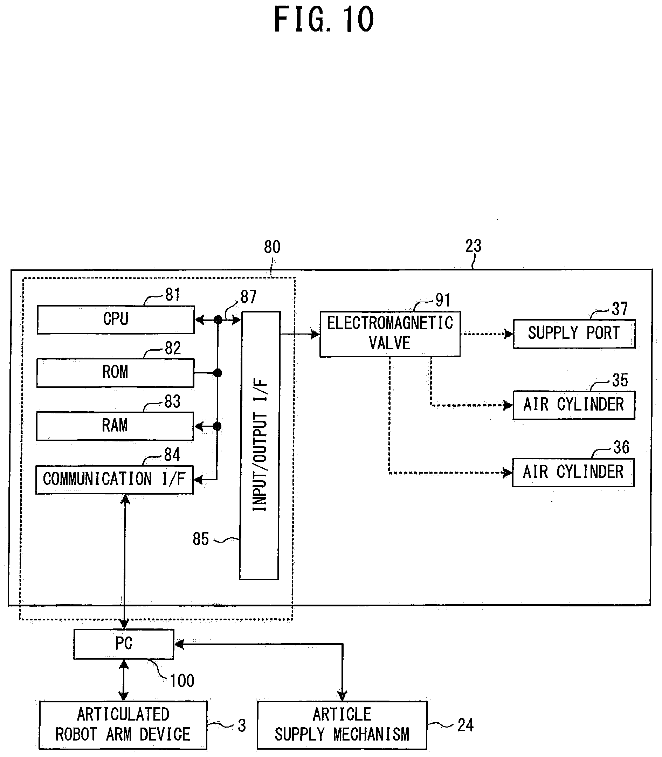

As shown in FIG. 1 and FIG. 2, the conveyance system 1 is provided with a frame 2, an articulated robot arm device (hereinafter referred to as an "arm device") 3, article supply devices 4 and 5, a work table 6 and a PC 100 (refer to FIG. 10). The frame 2 is formed by assembling rod members made of iron or aluminum into a rectangular shape. The arm device 3, the article supply devices 4 and 5, and the work table 6 are disposed on the inside of an outer frame of the frame 2. The arm device 3 is an industrial robot, and is able to convey a sheet-like article 9 held by an article holding device 23 of the article supply devices 4 and 5 to a predetermined conveyance position. The conveyance position of the present embodiment is a position in which the article holding device 23 is above the work table 6 and in which the position of the article holding device 23 in the up-down direction is lower than the position shown in FIG. 2. The conveyance position may be changed as appropriate depending on the structure of the conveyance system, such as an upper portion of a bed portion of a sewing device. The article 9 of the present embodiment is a cloth piece having a trapezoid shape with round corners. Together with the article supply devices 4 and 5, the arm device 3 conveys the article 9 onto the work table 6. The arm device 3 is provided with arm portions 11 and 12, a support portion 13 and a base portion 14. The arm portion 11 is provided with a rotation linear drive device (hereinafter referred to as a "drive device") 15.

The drive device 15 is provided with a ball screw 16, a first motor 18 and a second motor 19. The ball screw 16 extends in the up-down direction. The ball screw 16 is inserted through one end portion of the arm portion 11. The drive device 15 can rotate the ball screw 16 around its axis by the first motor 18. The drive device 15 can move the ball screw 16 along its extending direction by the second motor 19. The rotation around the ball screw 16 is rotation around an axis line of the ball screw 16 in a clockwise direction or a counterclockwise direction. The arm portion 12 extends in the front-rear direction, and the front end portion of the arm portion 12 rotatably supports another end portion of the arm portion 11. The support portion 13 extends in the up-down direction, and the upper end of the support portion 13 rotatably supports the rear end portion of the arm portion 12. The base portion 14 has a plate shape that extends horizontally, and is fixed to the frame 2. The base portion 14 is coupled to the lower end of the support portion 13. The arm device 3 is fixed to the base portion 14. The arm device 3 can rotate each of the arm portions 11 and 12.

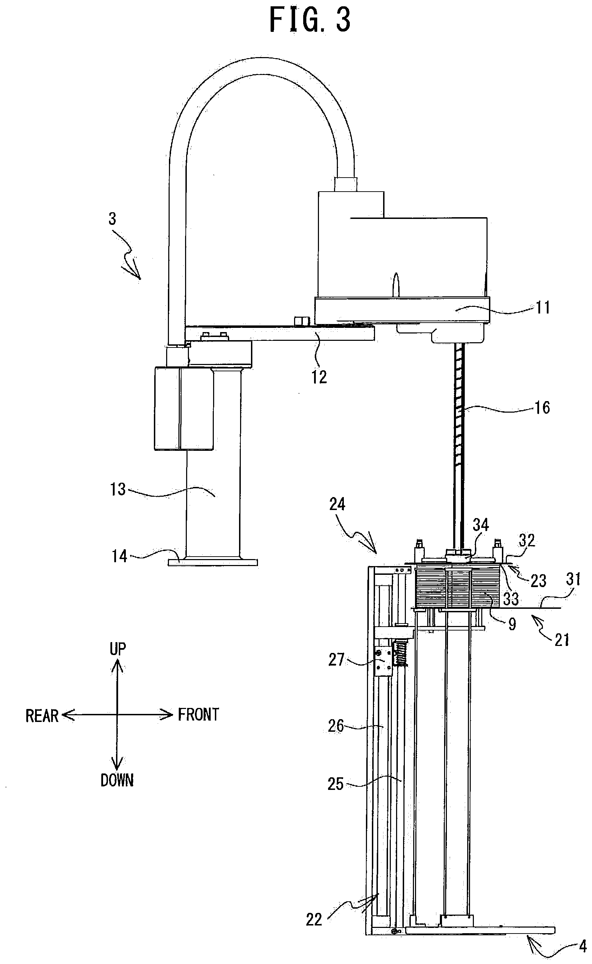

The article supply devices 4 and 5 have the same structure. Therefore, the article supply device 4 will be explained in detail and an explanation of the article supply device 5 will be omitted. As shown in FIG. 3, the article supply device 4 is provided with an article supply mechanism 24 and the article holding device 23. The article holding device 23 is common between the article supply devices 4 and 5. The article supply mechanism 24 supplies the sheet-like article 9 to the article holding device 23. The article supply mechanism 24 is fixed to the inside of the frame 2 (refer to FIG. 1). The article supply mechanism 24 is provided with a placement table 21, an air cylinder 22 and a shaft 25. The placement table 21 has a surface 31 on which a plurality of the sheet-like articles 9 can be placed. The surface 31 extends substantially horizontally, and has a rectangular shape in a plan view. The area of the surface 31 is larger than the area of the article 9. The air cylinder 22 has a shaft 26 that extends in the up-down direction, and can move the placement table 21 in the upward direction. The air cylinder 22 is a so-called rod-less cylinder. The air cylinder 22 is provided with a piston (not shown in the drawings) and a main body portion 27. The piston is provided inside the shaft 26, and has a magnet (not shown in the drawings). The main body portion 27 is provided on the outer periphery of the shaft 26 and has a magnet (not shown in the drawings). The magnet of the piston is coupled, by magnetic attraction, with the magnet of the main body portion 27 via the shaft 26. The air cylinder 22 supplies air to the interior of the shaft 26 and moves the piston, thus moving the main body portion 27 along the shaft 26. The shaft 25 extends parallel to the shaft 26. The shaft 25 is inserted through a hole provided in the rear end portion of the placement table 21. A rear portion of the placement table 21 is coupled to the main body portion 27. The placement table 21 moves along the shaft 25 together with the main body portion 27. The air cylinder 22 is connected to an air compressor (not shown in the drawings) via an air tube (not shown in the drawings). A control portion (not shown in the drawings) of the article supply mechanism 24 controls an electromagnetic valve (not shown in the drawings) provided in the air tube, and controls the drive of the air cylinder 22.

The article holding device 23 is connected to the arm device 3. The article holding device 23 is fixed to the lower end of the ball screw 16. The article holding device 23 can hold the article 9 placed on the placement table 21 in a holding position that faces the placement table 21. The holding position is a position shown in FIG. 3. When the article holding device 23 is in the holding position, a base portion 32 is located above the placement table 21. When the article holding device 23 is in the holding position, the base portion 32 is located above the article supply mechanism 24.

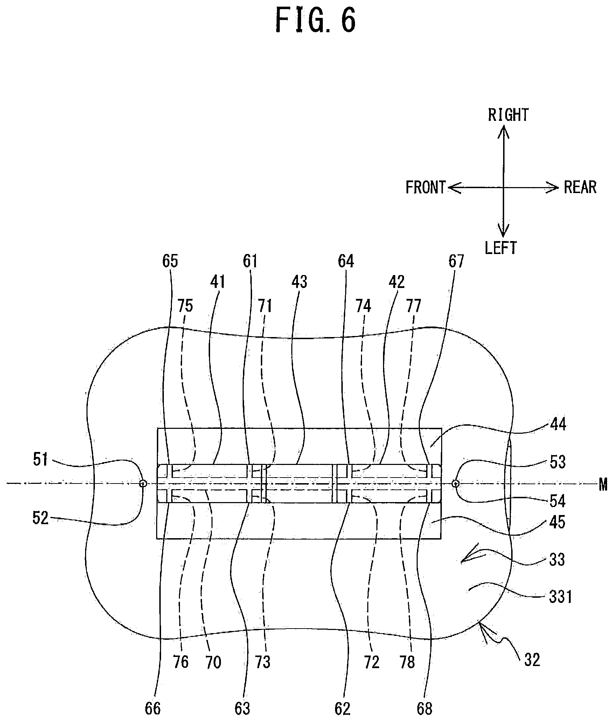

As shown in FIG. 3 to FIG. 10, the article holding device 23 is provided with the base portion 32, flow paths 70 to 78, inhibiting members 52 and 54, and a control portion 80. As shown in FIG. 6, the base portion 32 has a rectangular shape with round corners in a bottom view. A virtual line that extends in the front-rear direction at the center of the base portion 32 in the left-right direction is called a center line M. The base portion 32 is provided with a holding portion 33, a mounting portion 34, air cylinders 35, 36, and a supply port 37. The holding portion 33 is the lower surface of the base portion 32 and holds the article 9. An outer peripheral portion of the holding portion 33 is a horizontal portion 331 that extends horizontally. The flow paths 70 to 78 are provided in the base portion 32, and are communicated with holes 61 to 68 provided in the holding portion 33.

The holding portion 33 is provided with a first flow path portion 41, a recessed portion 43, a second flow path portion 42, a first inclined portion 44 and a second inclined portion 45. The horizontal portion 331 surrounds the first flow path portion 41, the recessed portion 43, the second flow path portion 42, the first inclined portion 44 and the second inclined portion 45. The first flow path portion 41, the recessed portion 43 and the second flow path portion 42 have a rectangular shape that is long in the front-rear direction in a bottom view. The first flow path portion 41, the recessed portion 43 and the second flow path portion 42 have the same length in the left-right direction, and are aligned on the center line M of the base portion 32 from the front to the rear in that order. The first flow path portion 41 and the second flow path portion 42 have the same length in the front-rear direction, and their length is longer than the length of the recessed portion 43 in the front-rear direction. The first flow path portion 41 is provided with the holes 61, 63, 65 and 66, and protrudes below the recessed portion 43. The holes 61, 63, 65 and 66 are provided on one side of the holding portion 33 in a predetermined direction. The predetermined direction of the present embodiment is the front-rear direction, and the one side is the front side. The predetermined direction is parallel to the horizontal portion 331 of the holding portion 33. The holes 61 and 65 are provided in the right surface of the first flow path portion 41 and open rightward direction, and the holes 63 and 66 are provided in the left surface of the first flow path portion 41 and open leftward direction. The holes 65 and 66 are disposed forward of the holes 61 and 63 such that the holes 65 and 66 face each other. The recessed portion 43 is provided between the hole 61 and the hole 62, and is recessed above the horizontal portion 331 of the holding portion 33. The recessed portion 43 is recessed above the holes 61 to 68. The second flow path portion 42 is disposed on the opposite side to the first flow path portion 41 with respect to the recessed portion 43, is provided with the holes 62, 64, 67 and 68, and protrudes below the recessed portion 43. The holes 62, 64, 67 and 68 are provided on the other side of the holding portion 33 in the predetermined direction. The other side is opposite from the one side. In the present embodiment, the other side is the rear side. The holes 64 and 67 are provided in the right surface of the second flow path portion 42 and open rightward direction, and the holes 62 and 68 are provided in the left surface of the second flow path portion 42 and open leftward direction. The holes 61 to 68 are provided below the upper end of the recessed portion 43. The holes 67 and 68 are disposed rearward of the holes 62 and 64 such that the holes 67 and 68 face each other. The direction in which the holes 61, 63, 65 and 66 are open is parallel to the direction in which the holes 62, 64, 67 and 68 are open. The holes 61 to 68 have the same size and are in the same position in the up-down direction. The holes 61, 64, 65 and 67 are located to the right of (in a first direction from) the center line M of the base portion 32. The holes 62, 63, 66 and 68 are located to the left of (in a second direction from) the center line M. In the front-rear direction, a distance from the holes 61 and 63 to a rear end portion of the first flow path portion 41 and a distance from the holes 62 and 64 to a front end portion of the second flow path portion 42 are shorter than half the length of the recessed portion 43.

The first inclined portion 44 is provided to the right of the first flow path portion 41, the recessed portion 43 and the second flow path portion 42. The first inclined portion 44 is connected to the upper end of the first flow path portion 41, the recessed portion 43 and the upper end of the second flow path portion 42, and is inclined downward to the right. The second inclined portion 45 is provided to the left of the first flow path portion 41, the recessed portion 43 and the second flow path portion 42. The second inclined portion 45 is connected to the upper end of the first flow path portion 41, the recessed portion 43 and the upper end of the second flow path portion 42, and is inclined downward to the left. The first inclined portion 44 and the second inclined portion 45 are disposed facing each other in the left-right direction such that the first flow path portion 41, the recessed portion 43 and the second flow path portion 42 are positioned therebetween. The article holding device 23 ejects, from the holes 61 to 68, a fluid supplied to the flow paths 70 to 78. Thus, the article holding device 23 sucks and holds the article 9, using the negative pressure generated between the holding portion 33 and the article 9. The fluid of the present embodiment is air.

The flow path 70 extends in the front-rear direction between the inhibiting members 52 and 54. The flow path 70 branches into the eight flow paths 71 to 78 that extend in the left-right direction. The flow path 71 is communicated with the hole 61, and extends to the right (in the first direction) toward the hole 61. The flow path 72 is communicated with the hole 62, and extends to the left (in the second direction), which is the opposite direction from the first direction, toward the hole 62. The flow path 73 is communicated with the hole 63 and the flow path 71. The direction from the flow path 73 toward the hole 63 is the leftward direction. The flow path 74 is communicated with the hole 64 and the flow path 72. The direction from the flow path 74 toward the hole 64 is the rightward direction. The flow paths 75 and 77 extend to the right, and are communicated with the holes 65 and 67, respectively. The flow paths 76 and 78 extend to the left, and are communicated with the holes 66 and 68, respectively.

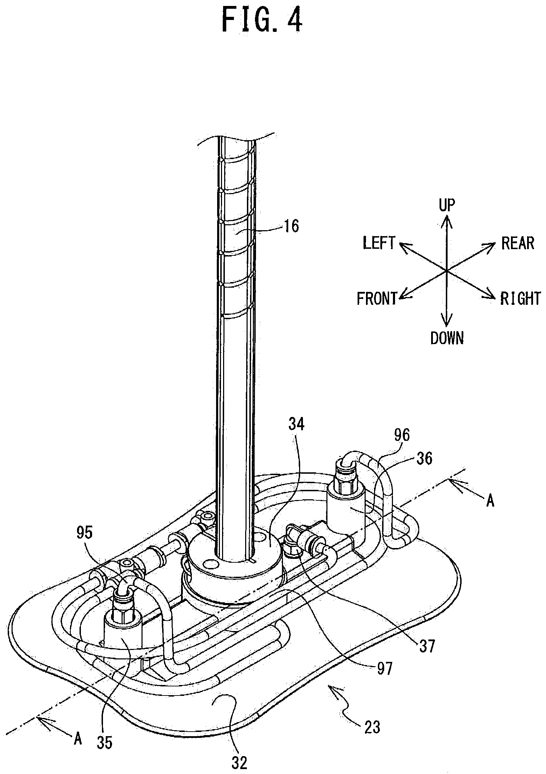

As shown in FIG. 4, FIG. 7 and FIG. 8, the mounting portion 34 is detachably mounted on the lower end of the ball screw 16 of the arm device 3. The mounting portion 34 is provided at the center of the upper surface of the base portion 32. The mounting portion 34 has a circular cylindrical shape in a plan view, and is inserted through the lower end of the ball screw 16.

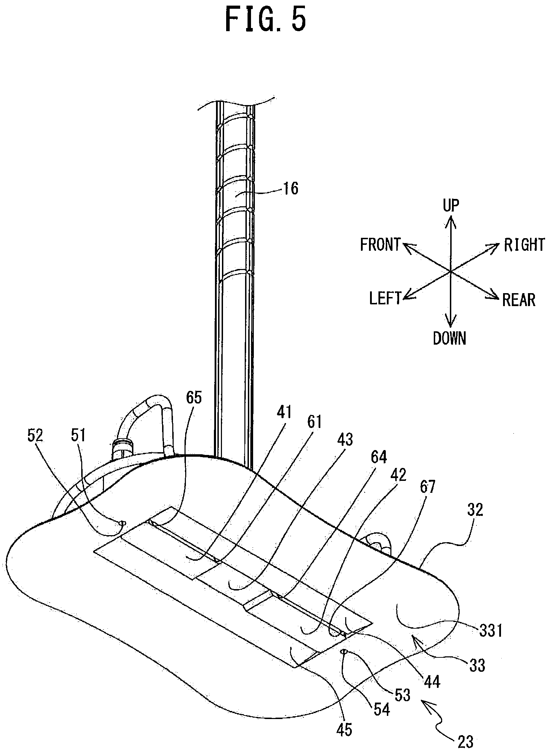

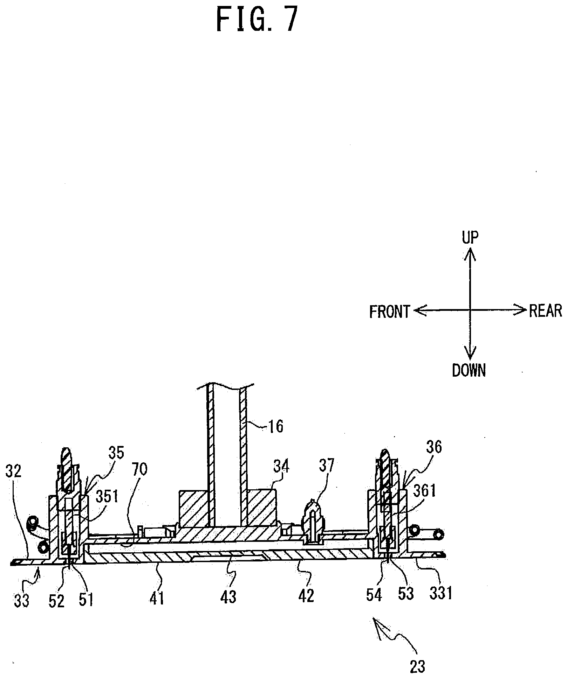

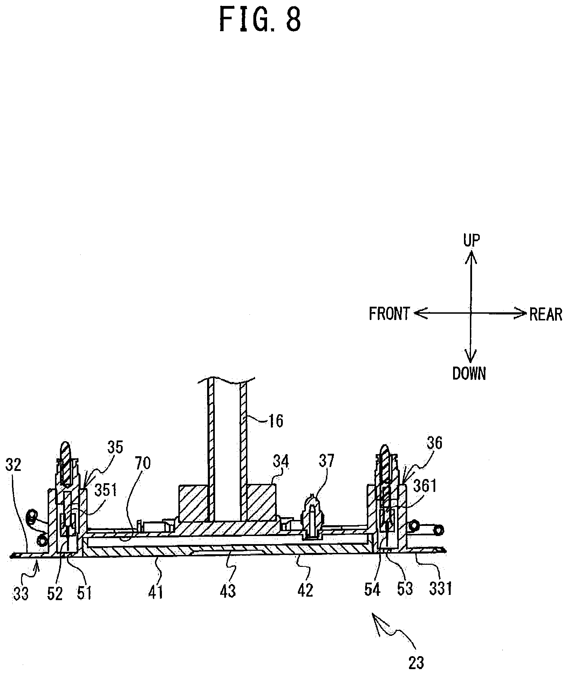

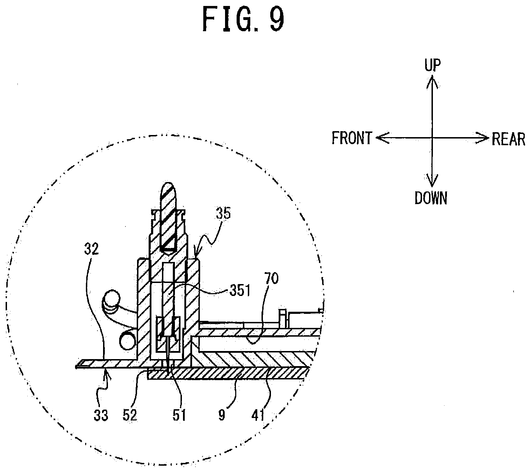

As shown in FIG. 5 to FIG. 8, the inhibiting members 52 and 54 are provided in the holding portion 33 and come into contact with the article 9 held by the holding portion 33 and thus inhibit movement of the article 9 in a direction along to the holding portion 33. Therefore, the inhibiting members 52 and 54 can inhibit the article 9 from being displaced with respect to the holding portion 33. The inhibiting members 52 and 54 of the present embodiment are needles that protrude downward from the holding portion 33. The inhibiting members 52 and 54 extend substantially perpendicularly to the horizontal portion 331. The inhibiting members 52 and 54 are respectively inserted through holes 51 and 53 provided in the holding portion 33. The inhibiting members 52 and 54 are disposed facing each other such that the holes 61 to 68 are positioned therebetween, in a direction (the front-rear direction) parallel to the horizontal portion 331. The air cylinder 35 moves the inhibiting member 52 between a protruding position in which the inhibiting member 52 protrudes downward from the hole 51 of the holding portion 33 and a retracted position in which the inhibiting member 52 is retracted above the holding portion 33. The air cylinder 35 has a piston 351 and an urging member (not shown in the drawings). The inhibiting member 52 is fixed to the lower end of the piston 351. The urging member urges the piston 351 upward. The air cylinder 36 moves the inhibiting member 54 between the protruding position in which the inhibiting member 54 protrudes downward from the hole 53 of the holding portion 33 and the retracted position in which the inhibiting member 54 is retracted above the holding portion 33. The air cylinder 36 has a piston 361 and an urging member (not shown in the drawings). The inhibiting member 54 is fixed to the lower end of the piston 361. The urging member urges the piston 361 upward. FIG. 7 shows the protruding position and FIG. 8 shows the retracted position. The air cylinders 35 and 36 respectively move the inhibiting members 52 and 54 in a direction (the up-down direction) perpendicular to the horizontal portion 331 of the holding portion 33. As shown in FIG. 9, a protruding amount of the inhibiting members 52 and 54 from the holding portion 33 in the protruding position is smaller than the thickness of the article 9. The protruding amount may be changed in accordance with the thickness of the article 9. The air cylinders 35 and 36 are connected to an air compressor (not shown in the drawings) via air tubes 95 and 96. The supply port 37 is communicated with the flow path 70, and is connected to the air compressor via the air tube 97.

The control portion 80 controls the drive of the air cylinders 35 and 36. During a period in which the fluid is supplied to the flow paths 70 to 78, the control portion 80 moves the inhibiting members 52 and 54 to the protruding position. During a period in which the fluid is not supplied to the flow paths 70 to 78, the control portion 80 moves the inhibiting members 52 and 54 to the retracted position. During a period in which the control portion 80 does not supply air to the air cylinders 35 and 36, the inhibiting members 52 and 54 are in the retracted position. During a period in which the control portion 80 supplies air to the air cylinders 35 and 36, the inhibiting members 52 and 54 are in the protruding position.

As shown in FIG. 2, the work table 6 is a cuboid shaped table that is disposed to the right of the article supply devices 4 and 5. The upper surface of the work table 6 is substantially horizontal. The height of the upper surface of the work table 6 is substantially the same as the height of the upper ends of the article supply devices 4 and 5. The PC 100 is a known computer. The PC 100 is electrically connected to the article holding device 23, the article supply mechanism 24 and the arm device 3, and transmits and receives signals to and from each of the devices.

An electrical configuration of the article holding device 23 will be explained with reference to FIG. 10. The control portion 80 of the article holding device 23 is provided with a CPU 81, a ROM 82, a RAM 83, a communication I/F 84 and an input/output I/F 85. The CPU 81, the ROM 82 and the RAM 83 are electrically connected to the input/output I/F 85 via a signal line 87. The CPU 81 performs processing in accordance with various programs stored in the ROM 82, and controls the article holding device 23. The ROM 82 stores the various programs including an article supply program, various initial setting parameters and the like. The RAM 83 temporarily stores calculation results of the CPU 81, various data and the like. The communication I/F 84 is electrically connected to the input/output I/F 85. The communication I/F 84 is an interface for serial communication, for example. The communication I/F 84 is connected to a communication I/F of the PC 100. The communication I/F of the PC 100 is connected to a communication I/F provided in a control portion of the arm device 3, and a communication I/F provided in a control portion of the article supply mechanism 24. The control portion 80 of the article holding device 23 may directly control the article supply mechanism 24. The input/output I/F 85 is electrically connected to electromagnetic valve 91. The electromagnetic valve 91 is provided in a supply channel of the air that is supplied to the air cylinders 35, 36 and the supply port 37 by the air compressor.

The CPU 81 opens and closes the electromagnetic valve 91, and thus controls the drive and non-drive of the article holding device 23.

An overview of the processing performed by the conveyance system 1 will be explained. In the conveyance system 1, the arm device 3, and the article holding device 23 and the article supply mechanism 24 of the article supply devices 4 and 5 work in concert with each other, and convey the uppermost article 9 placed on the placement table 21 by the article supply mechanism 24 to the conveyance position on the work table 6. In accordance with a command from the PC 100, the arm device 3 controls the position of the article holding device 23 in the up-down direction and the horizontal direction. The control portion 80 of the article holding device 23 controls the drive of the air cylinders 35 and 36 and the supply of the fluid to the flow paths 70 to 78. In accordance with a command from the PC 100, the article supply mechanism 24 moves the placement table 21 upward.

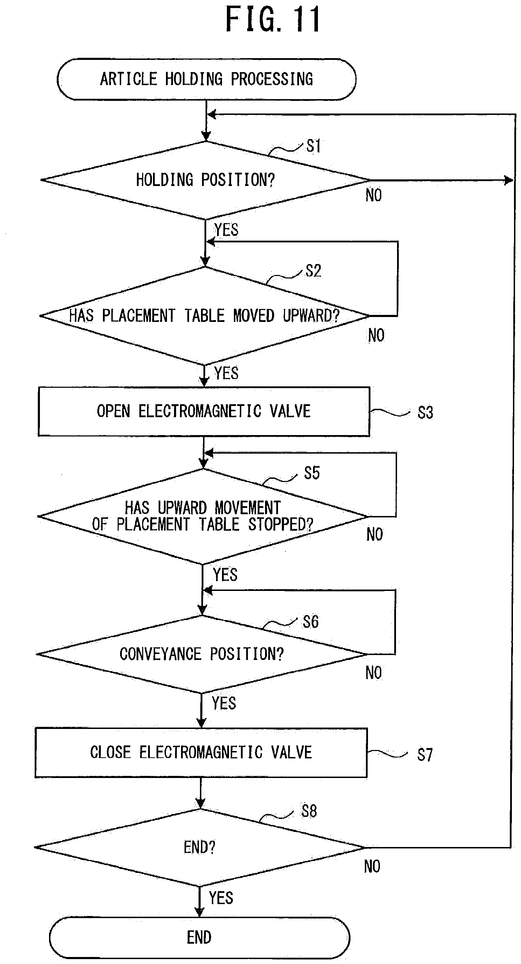

Article holding processing that is performed by the article holding device 23 will be explained with reference to FIG. 11. When the operator inputs a start command to the control portion 80 via the PC 100, the CPU 81 reads out the article supply program from the ROM 82 to the RAM 83 and performs the article supply program. When the processing is started, the electromagnetic valve 91 is closed.

The CPU 81 determines whether or not the article holding device 23 is in the holding position (step S1). On the basis of the signal acquired from the arm device 3, the PC 100 inputs a signal indicating whether or not the article holding device 23 is in the holding position, to the control portion 80. On the basis of the signal acquired from the PC 100, the CPU 81 determines whether or not the article holding device 23 is in the holding position. When the article holding device 23 is not in the holding position (no at step S1), the CPU 81 returns the processing to step S1. When the article holding device 23 is in the holding position (yes at step S1), the CPU 81 determines whether or not the placement table 21 has been moved upward (step S2). On the basis of a signal acquired from the article supply mechanism 24, the PC 100 inputs a signal indicating whether or not the placement table 21 has been moved upward, to the control portion 80. The CPU 81 determines whether or not the placement table 21 has been moved upward, on the basis of the signal acquired from the PC 100. The placement table 21 is moved upward until the uppermost article 9 placed on the placement table 21 comes into contact with the article holding device 23. When the uppermost article 9 placed on the placement table 21 comes into contact with the article holding device 23, the placement table 21 receives a downward force from the article holding device 23, and the upward movement stops. When the placement table 21 has not been moved upward (no at step S2), the CPU 81 returns the processing to step S2.

When the placement table 21 has been moved upward (yes at step S2), the CPU 81 opens the electromagnetic valve 91 (step S3). The supply port 37 flows air from the air compressor to the flow path 70. The air flowing in the flow path 70 also flows in the flow paths 71 to 78. The holes 61 to 68 of the holding portion 33 eject the air flowing in the flow paths 71 to 78 along the holding portion 33. The air moves along the inclined portions 44 and 45 of the holding portion 33, between the holding portion 33 and the uppermost article 9. The air ejected from the holes 61, 63, 65 and 66 provided to the front of the recessed portion 43 and the holes 62, 64, 67 and 68 provided to the rear of the recessed portion 43 flows away from the center line M (refer to FIG. 6). The holes 61, 64, 65 and 67, and the holes 62, 63, 66 and 68 are disposed on both sides of the center line M. The air ejected from the holes 61 to 68 tends to flow together with the air present in the recessed portion 43. Therefore, the recessed portion 43 tends to have a negative pressure. The article holding device 23 sucks and holds the uppermost article 9 using the negative pressure generated between the holding portion 33 and the uppermost article 9 placed on the placement table 21. The air cylinders 35 and 36 are supplied with air and move downward. The inhibiting members 52 and 54 move to the protruding position. The inhibiting members 52 and 54, which are needles, respectively pierce the article 9 in the vicinities of end portions of the article 9 in the longitudinal direction (the front-rear direction), and inhibit the displacement of the article 9 with respect to the holding portion 33.

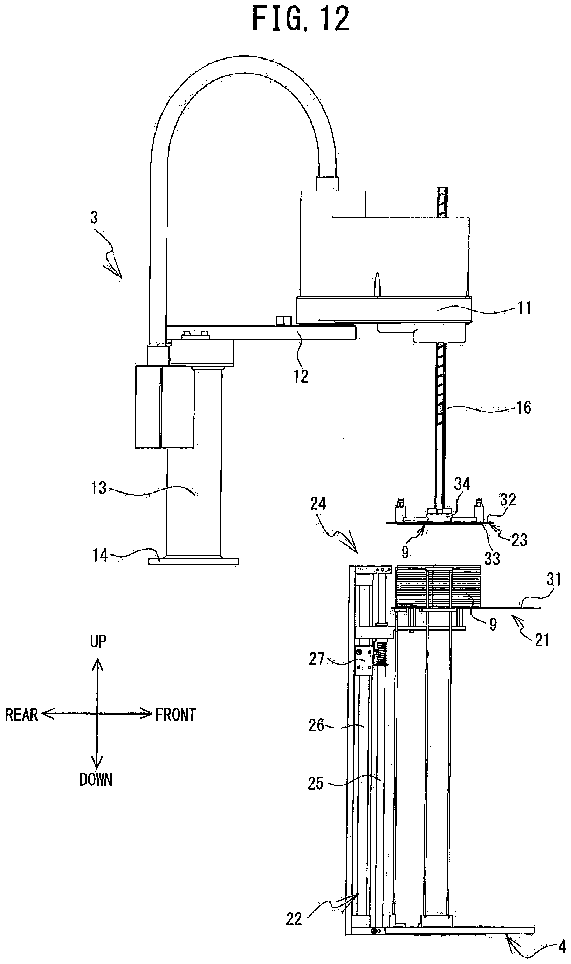

The CPU 81 determines whether or not the upward movement of the placement table 21 has been stopped on the basis of the signal from the PC 100 (step S5). When the upward movement of the placement table 21 has not been stopped (no at step S5), the CPU 81 returns the processing to step S5. When the upward movement of the placement table 21 has been stopped (yes at step S5), the CPU 81 determines whether or not the base portion 32 of the article holding device 23 is in the conveyance position. As shown in FIG. 12, after the arm device 3 has moved the article holding device 23 upward in accordance with the command from the PC 100, the arm device 3 moves the article holding device 23 to the conveyance position. While the article holding device 23 is moving from the holding position to the conveyance position, the article holding device 23 maintains the state of sucking and holding a sheet of the article 9. On the basis of the signal acquired from the arm device 3, the PC 100 inputs a signal indicating whether or not the article holding device 23 is in the conveyance position, to the control portion 80. On the basis of the signal acquired from the PC 100, the CPU 81 determines whether or not the article holding device 23 is in the conveyance position. When the article holding device 23 is not in the conveyance position (no at step S6), the CPU 81 returns the processing to step S6. When the article holding device 23 is in the conveyance position (yes at step S6), the CPU 81 closes the electromagnetic valve 91, and stops the ejection of air along the holding portion 33 from the holes 61 to 68 of the holding portion 33. The CPU 81 releases the suction/holding of the article 9, and places the article 9 on the work table 6 (step S7). The inhibiting members 52 and 54 move to the retracted position.

The CPU 81 determines whether or not to end the article holding processing (step S8). Whether or not to end the article holding processing is determined on the basis of, for example, a signal that is input to the control portion 80 from the PC 100. When the article holding processing is to be ended (yes at step S8), the CPU 81 ends the article holding processing. When the article holding processing should not be ended (no at step S8), the CPU 81 returns the processing to step S1.

The base portion 32, the holding portion 33 and the horizontal portion 331 of the article holding device 23 of the above-described embodiment are examples of a base portion, a holding surface and a horizontal portion of the present invention. The flow paths 70 to 78 are an example of flow paths of the present invention. Each of the holes 61 and 65 is an example of a first hole of the present invention. Each of the holes 62 and 68 is an example of a second hole of the present invention. Each of the holes 63 and 66 is an example of a third hole of the present invention. Each of the holes 64 and 67 is an example of a fourth hole of the present invention. Each of the flow paths 71 and 75 is an example of a first flow path of the present invention. Each of the flow paths 72 and 78 is an example of a second flow path of the present invention. Each of the flow paths 73 and 76 is an example of a third flow path of the present invention. Each of the flow paths 74 and 77 is an example of a fourth flow path of the present invention. The first flow path portion 41, the recessed portion 43, the second flow path portion 42, the first inclined portion 44 and the second inclined portion 45 are examples of a first flow path portion, a recessed portion, a second flow path portion, a first inclined portion and a second inclined portion of the present invention.

The article holding device 23 is provided with the base portion 32 whose lower surface has the holding portion 33 configured to hold the sheet-like article 9, and the flow paths 70 to 78 communicated with the holes 61 to 68 provided in the holding portion 33. The article holding device 23 sucks and holds the article 9 using the negative pressure generated between the holding portion 33 and the article 9 by ejecting, from the holes 61 to 68, the fluid supplied to the flow paths 70 to 78. The article holding device 23 is provided with the holes 61, 62, 65 and 68, the flow paths 71, 72, 75 and 78, and the recessed portion 43. When the article holding device 23 supplies the fluid to the flow paths 71, 72, 75 and 78, the fluid is ejected in the first direction from each of the holes 61 and 65, and the fluid is ejected in the second direction from each of the holes 62 and 68. In this manner, the holes 61 and 65 and the holes 62 and 68 eject the fluid in mutually opposite directions with the recessed portion 43 positioned therebetween. It is thus possible to effectively generate a negative pressure in the space of the recessed portion 43 between the holding portion 33 and the article 9, and the article 9 that faces the holding portion 33 can be drawn to the recessed portion 43 side more strongly than in a device that is not provided with the recessed portion 43. Therefore, the article holding device 23 can easily increase the suction power to be larger than that of a known device, and can more reliably suck and hold the sheet-like article 9, such as a cloth.

The article holding device 23 is provided with the holes 63, 64, 66 and 67, and the flow paths 73, 74, 76 and 77. Since the article holding device 23 supplies the fluid to the flow paths 71 to 78, in comparison to a device that supplies the fluid only to the flow paths 71, 72, 75 and 78, it is possible to more reliably generate a negative pressure in the space of the recessed portion 43 between the holding portion 33 and the article 9. Thus, the article 9 that faces the holding portion 33 can be drawn to the recessed portion 43 side.

The article holding device 23 has the first flow path portion 41, the second flow path portion 42, the first inclined portion 44 and the second inclined portion 45. In the article holding device 23, the fluid ejected from the holes 61, 64, 65 and 67 moves along the first inclined portion 44 and the fluid ejected from the holes 62, 63, 66 and 68 moves along the second inclined portion 45, between the holding portion 33 and the article 9. Therefore, in comparison to a device that is not provided with first and second inclined portions, the article holding device 23 tends to flow the fluid, can more reliably generate a negative pressure in the space of the recessed portion 43 between the holding portion 33 and the article 9, and can draw the article 9 that faces the holding portion 33 to the recessed portion 43 side.

A distance from each of the holes 61 and 63 to a rear end portion of the first flow path portion 41 and a distance from each of the holes 62 and 64 to a front end portion of the second flow path portion 42 are shorter than half the length of the recessed portion 43. The article holding device 23 is able to be provided with each of the holes 61 and 63 in the vicinity of a boundary between the recessed portion 43 and the first flow path portion 41. The article holding device 23 is also able to be provided with each of the holes 62 and 64 in the vicinity of a boundary between the recessed portion 43 and the second flow path portion 42. Thus, the article holding device 23 is able to effectively generate a negative pressure in the space of the recessed portion 43.

The article holding device 23 of the present invention can be changed in various ways besides the above-described embodiments. The article holding device 23 need not necessarily be provided for the article supply devices 4 and 5 of the conveyance system 1. The article holding device 23 need not necessarily be detachably mounted on the arm device 3. When the article holding device 23 is mounted on the arm device 3, the structure of the arm device 3 may be changed as appropriate. The base portion 32 may have a shape other than a rectangle, such as an elliptical shape in a plain view.

It is sufficient that the holes include the first hole and the second hole at least and that the holes be provided such that the fluid can be supplied along the holding portion 33. The number, arrangement, direction with respect to the flow paths, and size etc. of the holes may be changed as appropriate. The holes of the article holding device may be at least one of the holes 61 and 65 and at least one of the holes 62 and 68. In order to effectively generate a negative pressure in the recessed portion 43, it is preferable to eject the fluid from more close to the recessed portion. That is, in the article holding device, it is preferable that the first hole be provided in the vicinity of a boundary between the recessed portion 43 and the first flow path portion 41, in comparison to when the first hole is provided in a position separated from the boundary. In the article holding device, it is preferable that the second hole be provided in the vicinity of the boundary between the recessed portion 43 and the second flow path portion 42, in comparison to when the second hole is provided in a position separated from the boundary. For example, regarding the holes of the article holding device, it is preferable to provide the holes 61 and 62 only, in comparison to when the holes 65 and 68 only are provided. The holes of the article holding device may be the holes 61, 62, 63 and 64 only, or may be the holes 65, 66, 67 and 68 only. The flow paths may be changed as appropriate in accordance with the number, shape, size and arrangement of the holes. The flow paths of the article holding device may be at least one of the flow paths 71 and 75 and at least one of the flow paths 72 and 78. The first flow path and the second flow path of the article holding device may have different supply ports to supply the fluid. The flow paths of the article holding device may be the flow paths 71, 72, 73 and 74 only. The holding portion 33 of the article holding device 23 need not necessarily include all or some of the first flow path portion 41, the second flow path portion 42, the first inclined portion 44 and the second inclined portion 45. The shapes, sizes and arrangement etc. of the horizontal portion 331, the first flow path portion 41, the second flow path portion 42, the recessed portion 43, the first inclined portion 44 and the second inclined portion 45 may be changed as appropriate. The recessed portion 43 may be recessed upward in a hemispherical shape.

It is sufficient that an article holding program to execute the article holding processing in FIG. 11 may be stored in a storage device provided in the article holding device 23 until the article holding device 23 executes the program. The acquisition method and acquisition route of the program and each of the storage devices that store the program may be changed as appropriate. The article supply device 4 may receive the program to be executed by a processor, from other devices via a cable or wireless communication, and may store the received program in the storage device. The other devices include, for example, a PC and a server that is connected via a network. The storage device provided in the article holding device 23 may be a storage device, such as a HDD or a SSD.

Each of the steps of the article holding processing in FIG. 11 is not limited to the example in which the CPU 81 performs each of the steps, and another electronic device (an ASIC, for example) may perform part or all of the processing. Each of the steps of the above-described processing may be distributed and processed by a plurality of electronic devices (a plurality of CPUs, for example). Each of the steps of the article holding processing of the above-described embodiments may be changed in order, omitted or added, if necessary. The present invention also includes an aspect in which an OS or the like working on the article holding device 23 performs part or all of the actual processing in accordance with a command from the processor of the article holding device 23 and realizes the functions of the above-described embodiments. The control portion 80 may control the article supply mechanism 24.

## Claims

1. An article holding device comprising:
a base portion (32) including a holding portion (33) provided on a lower surface of the base portion and a recessed portion (43); and
flow paths (70-78) communicated with holes (61-68) provided in the holding portion, the holding portion configured to suck and hold a sheet-like article using a negative pressure generated between the holding portion and the sheet-like article on a lower surface of the holding portion by a fluid supplied to the flow paths being ejected from the holes,
the holding portion (33) having a horizontal portion (331) that extends horizontally, the holes including a first hole (61,65) and a second hole (62,68), the first hole being provided on one side of the holding portion in a predetermined direction parallel to the horizontal portion (331), and being open in a first direction of a direction orthogonal to the predetermined direction, the second hole (62,68) being provided on another side, which is opposite from the one side, of the holding portion (33) in the predetermined direction, and being open in a second direction, which is the opposite direction from the first direction, and parallel to the first hole (61,65),
the flow paths including a first flow path (71,75) and a second flow path (72,78), the first flow path extending in the first direction toward the first hole (61,65) and being communicated with the first hole, the second flow path (72,78) extending in the second direction toward the second hole (62, 68) and being communicated with the second hole, and
the recessed portion (43) being provided between the first hole (61,65) and the second hole (62,68), and being recessed above the horizontal portion (331) of the holding portion (33).

2. The article holding device according to claim 1, wherein
the holes further include a third hole (63,66) and a fourth hole (64,67),
the third hole is provided on the one side of the recessed portion (43) of the holding portion (33) in the predetermined direction, the fourth hole (64,67) is provided on the other side of the recessed portion (43) of the holding portion (33) in the predetermined direction,
the flow paths further include a third flow path (73,76) and a fourth flow path (74,77),
the third flow path is communicated with the third hole (63,66) and the first flow path (71,75), and a direction from the third flow path (73,76) toward the third hole is the second direction, and
the fourth flow path (74,77) is communicated with the fourth hole (64,67) and the second flow path (72,78), and a direction from the fourth flow path toward the fourth hole is the first direction.

3. The article holding device according to claim 2, wherein
the holding portion includes a first flow path portion (41), a second flow path portion (42), a first inclined portion (44), and a second inclined portion (45),
the first flow path portion is provided with the first hole (61,65) and the third hole (63,66), and protrudes below the recessed portion (43),
the second flow path portion (42) is disposed on the opposite side to the first flow path portion (44) with respect to the recessed portion (43), is provided with the second hole (62,68) and the fourth hole (64,67) and, protrudes below the recessed portion,
the first inclined portion (44) is connected to an upper end of the first flow path portion (41), the recessed portion (43), and an upper end of the second flow path portion (42), and is inclined downward to the first direction,
the second inclined portion (45) is connected to the upper end of the first flow path Portion (41), the recessed portion (43) and the upper end of the second flow path portion (42), and is inclined downward to the second direction.

4. The article holding device according to claim 3, wherein
a distance from each of the first hole and the third hole to a recessed portion side of the first flow path portion and a distance from each of the second hole and the fourth hole to a recessed portion side of the second flow path portion are shorter than half a length of the recessed portion.

## Patentansprüche

1. Artikelhaltevorrichtung, umfassend:
einen Basisabschnitt (32) einschließlich eines Halteabschnitts (33), der auf einer unteren Fläche des Basisabschnitts bereitgestellt ist, und eines ausgesparten Abschnitts (43); und
Strömungswege (70-78), die mit Löchern (61-68) in Verbindung stehen, die in dem Halteabschnitt bereitgestellt sind, wobei der Halteabschnitt konfiguriert ist, um einen plattenartigen Artikel unter Verwendung eines Unterdrucks anzusaugen und zu halten, der zwischen dem Halteabschnitt und dem plattenartigen Artikel auf einer unteren Fläche des Halteabschnitts durch ein Fluid erzeugt wird, das den Strömungswegen zugeführt wird und aus den Löchern ausgestoßen wird,
wobei der Halteabschnitt (33) einen horizontalen Abschnitt (331) hat, der sich horizontal erstreckt,
wobei die Löcher ein erstes Loch (61, 65) und ein zweites Loch (62,68) umfassen, wobei das erste Loch auf einer Seite des Halteabschnitts in einer festgelegten Richtung parallel zu dem horizontalen Abschnitt (331) bereitgestellt ist und in einer ersten Richtung einer zu der festgelegten Richtung orthogonalen Richtung offen ist, wobei das zweite Loch (62,68) auf einer anderen Seite des Halteabschnitts (33), die der einen Seite gegenüberliegt, in der festgelegten Richtung bereitgestellt ist und in einer zweiten Richtung, die die zu der ersten Richtung entgegengesetzte Richtung ist, offen ist und parallel zu dem ersten Loch (61, 65) ist,
wobei die Strömungswege einen ersten Strömungsweg (71,75) und einen zweiten Strömungsweg (72,78) umfassen, wobei sich der erste Strömungsweg in der ersten Richtung zu dem ersten Loch (61,65) hin erstreckt und mit dem ersten Loch verbunden ist, wobei sich der zweite Strömungsweg (72,78) in der zweiten Richtung zu dem zweiten Loch (62,68) hin erstreckt und mit dem zweiten Loch verbunden ist, und
wobei der ausgesparte Abschnitt (43) zwischen dem ersten Loch (61, 65) und dem zweiten Loch (62,68) bereitgestellt ist und über dem horizontalen Abschnitt (331) des Halteabschnitts (33) ausgespart ist.

2. Artikelhaltevorrichtung nach Anspruch 1, wobei
die Löcher ferner ein drittes Loch (63,66) und ein viertes Loch (64,67) umfassen,
das dritte Loch auf der einen Seite des ausgesparten Abschnitts (43) des Halteabschnitts (33) in der festgelegten Richtung bereitgestellt ist,
das vierte Loch (64, 67) auf der anderen Seite des ausgesparten Abschnitts (43) des Halteabschnitts (33) in der festgelegten Richtung bereitgestellt ist,
die Strömungswege ferner einen dritten Strömungsweg (73,76) und einen vierten Strömungsweg (74,77) umfassen,
der dritte Strömungsweg mit dem dritten Loch (63,66) und dem ersten Strömungsweg (71,75) verbunden ist und eine Richtung von dem dritten Strömungsweg (73,76) zu dem dritten Loch die zweite Richtung ist, und
der vierte Strömungsweg (74,77) mit dem vierten Loch (64,67) und dem zweiten Strömungsweg (72,78) verbunden ist und eine Richtung vom vierten Strömungsweg zu dem vierten Loch die erste Richtung ist.

3. Artikelhaltevorrichtung nach Anspruch 2, wobei
der Halteabschnitt einen ersten Strömungswegabschnitt (41), einen zweiten Strömungswegabschnitt (42), einen ersten geneigten Abschnitt (44) und einen zweiten geneigten Abschnitt (45) umfasst,
der erste Strömungswegabschnitt mit dem ersten Loch (61,65) und dem dritten Loch (63,66) bereitgestellt ist und unter dem ausgesparten Abschnitt (43) vorsteht,
der zweite Strömungswegabschnitt (42) im Hinblick auf den ausgesparten Abschnitt (43) auf der dem ersten Strömungswegabschnitt (44) gegenüberliegenden Seite angeordnet ist, mit dem zweiten Loch (62,68) und dem vierten Loch (64,67) bereitgestellt ist und unter dem ausgesparten Abschnitt vorsteht,
der erste geneigte Abschnitt (44) mit einem oberen Ende des ersten Strömungswegabschnitts (41), dem ausgesparten Abschnitt (43) und einem oberen Ende des zweiten Strömungswegabschnitts (42) verbunden ist und nach unten in die erste Richtung geneigt ist,
der zweite geneigte Abschnitt (45) mit dem oberen Ende des ersten Strömungswegabschnitts (41), dem ausgesparten Abschnitt (43) und dem oberen Ende des zweiten Strömungswegabschnitts (42) verbunden ist und nach unten in die zweite Richtung geneigt ist.

4. Artikelhaltevorrichtung nach Anspruch 3, wobei
ein Abstand von jedem des ersten Lochs und des dritten Lochs zu einer Aussparungsabschnittsseite des ersten Strömungswegabschnitts und ein Abstand von jedem des zweiten Lochs und des vierten Lochs zu einer Aussparungsabschnittsseite des zweiten Strömungswegabschnitts kürzer als eine halbe Länge des ausgesparten Abschnitts sind.

## Revendications

1. Dispositif de maintien d'articles comprenant :
une partie de base (32) comprenant une partie de maintien (33) prévue sur une surface inférieure de la partie de base et une partie évidée (43) ; et
des voies d'écoulement (70-78) communiquant avec des trous (61-68) prévus dans la partie de maintien, la partie de maintien étant configurée pour aspirer et maintenir un article en forme de feuille en utilisant une pression négative générée entre la partie de maintien et l'article en forme de feuille sur une surface inférieure de la partie de maintien par un fluide fourni aux voies d'écoulement étant éjecté des trous,
la partie de maintien (33) ayant une partie horizontale (331) qui s'étend horizontalement,
les trous incluant un premier trou (61,65) et un second trou (62,68), le premier trou étant prévu sur un côté de la partie de maintien dans une direction prédéterminée parallèle à la partie horizontale (331) et étant ouvert dans une première direction d'une direction orthogonale à la direction prédéterminée, le second trou (62,68) étant prévu sur un autre côté, qui est opposé à un côté, de la partie de maintien (33) dans la direction prédéterminée, et étant ouvert dans une seconde direction, qui est la direction opposée à la première direction, et parallèle au premier trou (61,65),
les voies d'écoulement incluant une première voie d'écoulement (71,75) et une seconde voie d'écoulement (72,78), la première voie d'écoulement s'étendant dans la première direction vers le premier trou (61,65) et étant en communication avec le premier trou, la seconde voie d'écoulement (72, 78) s'étendant dans la seconde direction vers le second trou (62, 68) et étant en communication avec le second trou, et
la partie évidée (43) étant prévue entre le premier trou (61,65) et le second trou (62,68), et étant évidée au-dessus de la partie horizontale (331) de la partie de maintien (33).

2. Dispositif de maintien d'articles selon la revendication 1, dans lequel
les trous incluent en outre un troisième trou (63,66) et un quatrième trou (64,67),
le troisième trou est prévu d'un côté de la partie évidée (43) de la partie de maintien (33) dans la direction prédéterminée, le quatrième trou (64,67) est prévu de l'autre côté de la partie évidée (43) de la partie de maintien (33) dans la direction prédéterminée,
les voies d'écoulement incluent en outre une troisième voie d'écoulement (73,76) et une quatrième voie d'écoulement (74, 77),
la troisième voie d'écoulement communique avec le troisième trou (63,66) et la première voie d'écoulement (71,75), et une direction de la troisième voie d'écoulement (73,76) vers le troisième trou est la deuxième direction, et
la quatrième voie d'écoulement (74,77) communique avec le quatrième trou (64,67) et la seconde voie d'écoulement (72,78),
et une direction de la quatrième voie d'écoulement vers le quatrième trou est la première direction.

3. Dispositif de maintien d'articles selon la revendication 2, dans lequel
la partie de maintien inclut une première partie de voie d'écoulement (41), une seconde partie de voie d'écoulement (42), une première partie inclinée (44) et une seconde partie inclinée (45),
la première partie de voie d'écoulement est pourvue du premier trou (61,65) et du troisième trou (63,66), et fait saillie sous la partie évidée (43),
la seconde partie de voie d'écoulement (42) est disposée du côté opposé à la première partie de voie d'écoulement (44) par rapport à la partie évidée (43), est pourvue du second trou (62,68) et du quatrième trou (64, 67) et, fait saillie sous la partie évidée,
la première partie inclinée (44) est connectée à une extrémité supérieure de la première partie de voie d'écoulement (41), la partie évidée (43) et une extrémité supérieure de la seconde partie de voie d'écoulement (42), et est inclinée vers le bas par rapport à la première direction,
la seconde partie inclinée (45) est connectée à l'extrémité supérieure de la première partie de voie d'écoulement (41), la partie évidée (43) et l'extrémité supérieure de la seconde partie de voie d'écoulement (42),
et est incliné vers le bas dans la seconde direction.

4. Dispositif de maintien d'articles selon la revendication 3, dans lequel
une distance de chacun du premier trou et du troisième trou à un côté de partie évidée de la première partie de voie d'écoulement et une distance de chacun du second trou et du quatrième trou à un côté de partie évidée de la seconde partie de voie d'écoulement sont plus courtes qu'une demi-longueur de la partie évidée.
